Europäisches Patentamt

(19) European Patent Office (11) Publication number: **0 044 829**

Office européen des brevets **B1**

(12) **EUROPEAN PATENT SPECIFICATION**

(45) Date of publication of patent specification: **29.05.85** (51) Int. Cl.⁴: **B 66 F 9/14**

(21) Application number: **80900651.3**

(22) Date of filing: **07.02.80**

(86) International application number:
**PCT/US80/00129**

(87) International publication number:
**WO 81/02290 20.08.81 Gazette 81/20**

(54) **HYDRAULIC CYLINDER WITH SPHERICAL BEARING MOUNT.**

(43) Date of publication of application:
**03.02.82 Bulletin 82/05**

(45) Publication of the grant of the patent:
**29.05.85 Bulletin 85/22**

(84) Designated Contracting States:
**DE GB SE**

(56) References cited:
**CA-A- 716 425**
**FR-A-2 006 768**
**US-A-2 643 784**
**US-A-2 793 087**
**US-A-3 819 078**
**US-A-3 923 349**
**US-A-3 980 149**
**US-A-4 125 199**

(73) Proprietor: **Towmotor Corporation**
**7111, Tyler Boulevard**
**Mentor Ohio 44060 (US)**

(72) Inventor: **REEVES, Jerry L.**
**17790 Frost Road**
**Dallas, OR 97338 (US)**

(74) Representative: **Wagner, Karl H.**
**WAGNER & GEYER Patentanwälte**
**Gewuerzmuehlstrasse 5 Postfach 246**
**D-8000 München 22 (DE)**

Courier Press, Leamington Spa, England.

## Description

The present invention is related to hydraulic cylinder mounts.

Present side shiftable carriage assemblies for lift trucks include a first carriage which is mounted to a mast and a second carriage which is mounted on and side-shiftable via hydraulic cylinders with respect to the first carriage. Such an arrangement places the load carried by the lift truck further forward from the center of gravity of the truck than would normally occur with a lift truck having a single non-side-shiftable, carriage. Accordingly, the lift truck with the side shiftable carriage is unable to lift as large a load as the truck with the non-side-shiftable carriage owing to that increased distance. Thus, there is a need to provide the side-shift capability while keeping the load as close as possible to the center of gravity of the lift truck.

One solution to this problem has been to mount forks for the lift truck directly to a single carriage which is mounted to the mast, and then to actuate the forks with hydraulic cylinders to provide shifting of the load relative to the carriage. In the first presented side-shiftable carriage assembly, due to the depth of both the first and second carriages, the hydraulic cylinders, using conventional cylinder mounts, can be conveniently housed between the carriages. However, with the mounting of the forks directly onto a single carriage, the depth of the carriage assembly is reduced and the conventional hydraulic cylinder mounts are too large to be used economically and efficiently.

One traditional cylinder mount includes a trunnion mount, which is generally located about the cylinder, midway along the length thereof, and which allows the hydraulic cylinder to pivot about a transverse axis. As previously indicated, this mount is too bulky when incorporated in a carriage having the forks mounted side-slidably on a single carriage. Further, since the trunnion mount only allows the cylinder to pivot about a transverse axis, the cylinder must be sufficiently massive and sturdy to resist bending forces perpendicular to the transverse axis.

Another type of cylinder mount includes a bifurcated end mount located at the head end of the cylinder and adapted to receive a member extending from the carriage. A pin is provided through the bifurcated end to pivotally mount the bifurcated end to the members extending from the carriage. The axis of the pin is substantially perpendicular to the axis of the cylinder and allows the cylinder to pivot about a transverse axis. The rod end of the cylinder is affixed to the fork to be actuated. Such an arrangement has all the disadvantages of the above trunnion mounts.

Another prior art cylinder mount is disclosed in US—A—4,031,967. This mount includes a spherical bearing mount located about the cylinder housing. Accordingly, the mount is large and would be inappropriate for the above carriage and fork arrangement.

From FR—A—2 006 768 (& GB—A—1 200 675) is known: a mast having a carriage mounted on said mast, a load carrying fork mounted on said carriage and movable relative to said carriage, a hydraulic cylinder having a cylindrical housing, a rod and a longitudinal housing axis, said housing have a predetermined outer diameter and first and second ends, said rod being slidably disposed in said housing and extendable past the second end of said housing, said rod being connected to said fork (carriage) and said cylindrical housing being connected to said carriage. The known arrangement further comprises a bracket having a first spherical load bearing surface and being positioned at a location adjacent the first end of said housing and a mount having a second spherical load bearing surface, being matingly engaged with said first spherical load bearing surface and pivotal relative thereto, a housing end cap, said housing end cap being connected to said first end of the cylindrical housing and said second spherical load bearing surface being connected to said end cap and extending from said end cap along said mount axis to a location spaced from said first end, said second spherical load bearing surface having a diameter less than the diameter of said housing.

The present invention is directed to overcoming one or more of the problems as set forth above.

In one aspect of the present invention, a mount assembly as set forth in claim 1 is provided. Preferred embodiments are disclosed in claims 2—6.

The present invention is more compact than prior art devices as it is located at an end of the cylinder housing and has a diameter which is less than the cylinder housing. The mount having a spherical load bearing surface allows three degrees of freedom, and thus the cylinder is self-centering, so that as bending moments and stresses are placed on the cylinder due to loading of the forks, the cylinder can move to align and relieve the bending moments and stresses. The construction of the cylinder housing and rod do not have to be as massive and sturdy as would be necessitated if the cylinder had to absorb such bending moments and stresses. This being the case, the overall diameters of the rod and cylindrical housing are reduced and the cylinder and mount can be even more compact.

In another aspect of the invention, the mounting assembly of any of claims 1—6 is characterised by the features of part two of claim 7. This aspect of the apparatus of the invention has all of the advantages as described hereinabove and allows the carriage and the load held thereby to be closer to the center of gravity of the lift truck to which the mast is affixed than does the prior art. Accordingly, a larger load can be carried than would be possible if the load were held farther from the center of gravity of the lift truck.

Fig. 1 is a diagrammatic perspective view of a lift truck incorporating an embodiment of the hydraulic cylinder mount of the present invention.

Figure 2 is a diagrammatic front elevational view, partially cut away and sectioned, of the carriage depicted in Figure 1 and the embodiment of the hydraulic cylinder mount assembly of the present invention.

Figure 3 is a diagrammatic cross-sectional view of the embodiment of the hydraulic cylinder mount assembly of the present invention as depicted in Figure 2.

Figure 4 is a diagrammatic partial front elevational view, partially sectioned, of a carriage with an alternate embodiment of a hydraulic cylinder mount assembly of the present invention.

Figure 5 is a diagrammatic cross-sectional view of the alternate embodiment of the hydraulic cylinder mount assembly of the present invention as depicted in Figure 4.

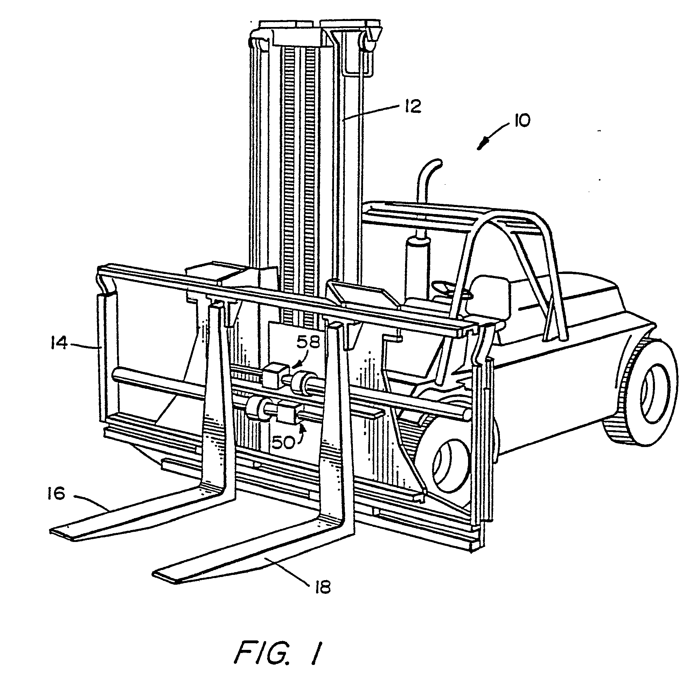

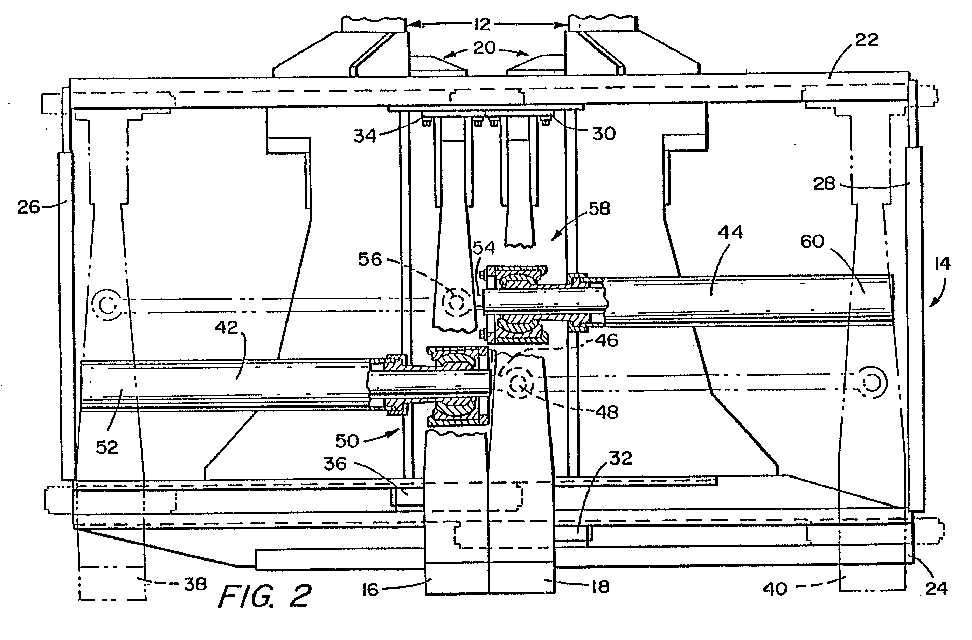

With reference to Figure 1, a lift truck 10 is depicted having a mast 12 with a carriage 14 movably mounted thereon. Side-slidably mounted on the carriage 14 are first fork 16 and second fork 18. Turning to Figure 2, a front elevational view of the carriage 14 is depicted with the forks 16 and 18 shifted to positions adjacent each other and in the middle of carriage 14.

Carriage 14 includes frame structure 20 which is movably mounted to the mast 12 and has upper and lower horizontal rails 22 and 24 that are interconnected by vertical end members 26 and 28. Mounts 30 and 32 slidably secure second fork 18 to upper and lower rails 22 and 24, respectively, and mounts 34 and 36 slidably secure first fork 16 to the upper rail and lower rail 22 and 24, respectively. Fork 16 is slidable from a substantially middle carriage position, located immediately adjacent to second fork 18, to a leftward end position shown in phantom and identified with the numeral 38. Similarly, second fork 18 is movable to a right-ward end position shown in phantom and identified by the numeral 40.

The movement of first and second forks 16 and 18 as indicated above is accomplished by hydraulic cylinders 44 and 42, respectively. A rod 46 of hydraulic cylinder 42 is pivotally pinned to second fork 18 by pin 48 and is mounted to frame structure 20 by hydraulic cylinder mount 50 of the invention. The head end 52 of hydraulic cylinder 42 is unsecured and free to move. Similarly, a rod 54 of hydraulic cylinder 44 is pivotally secured to first fork 16 by pin 56 and is mounted to frame structure 20 by hydraulic cylinder mount 58 of the invention. The head end 60 is free to move in the same manner as head end 52.

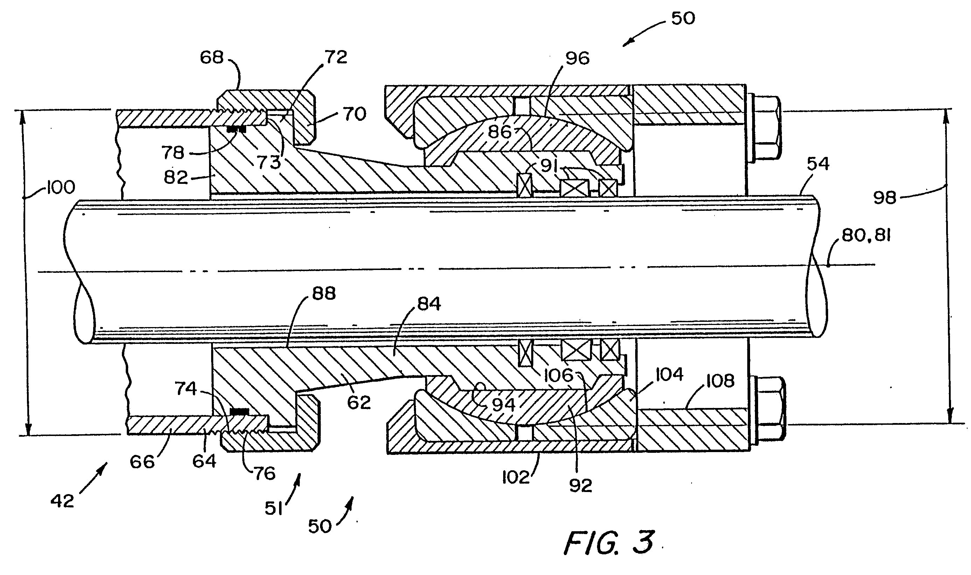

Turning to Figure 3, a cross-sectional view of the hydraulic cylinders mount assembly 50 of the invention is depicted. It is to be understood that the following description applies equally well to hydraulic cylinder mount assembly 58. Hydraulic cylinder mount assembly 50 includes a mount 51 having a cylinder rod endcap 62, which is secured to the rod end 64 of housing 66 of the cylinder 42 by an annulus 68 which has a lip 70. Lip 70 retains an annular flange 72 of cylinder plug portion 82 of endcap 62 against end 73 of cylinder housing 66, with internal threads 74 of annulus 68 engaging external threads 76 of housing 66. An O-ring or other type of gasket 78 is located on the external surface of plug 82, adjacent to flange 72 and is compressed between housing 66 and end cap 62 to provide a fluid seal.

Endcap 62 has cylindrical symmetry about an axis 80 coincident with the axis 81 of the cylinder 42. End cap 62 additionally includes a conical neck portion 84 which extends from plug 82 and an annular land 86 secured to neck portion 84 and positioned distally from plug 82. Rod endcap 62 further defines a longitudinal bore 88 having an axis 81 coincident with axis 80, which accommodates the rod 54. A plurality of seals are located in grooves 91 defined in bore 88 and are compressibly held between rod 54 and rod endcap 62. A load bearing 92, which has three pieces or is split for assembly, has an annular groove 94 which accepts land 86. Load bearing 92 defines a truncated, convex spherical load bearing surface 96, which has a diameter 98 which in a preferred embodiment is less than the diameter 100 of the hydraulic cylinder 42. It is to be understood that alternatively diameter 98 can be equal to or larger than diameter 100. Further, the axis of symmetry of spherical surface 96 is coincident with axis 80.

Mount assembly 50 includes a bracket 102 with a load bearing 104 which defines a truncated spherically concave surface 106 which accepts convex spherical surface 96. Bracket 102 is mounted to frame structure 20 by welding or other means known in the art. Bracket 102 defines a bore 108 through which rod 54 extends. Bore 108 allows rod 54 to have three degrees of freedom of motion as spherical surface 96 pivots on spherical surface 106.

The operation of the hydraulic cylinder mount assembly 50 of the invention is as follows. With spherical load bearing surface 96 mounted on bracket 102, the rod endcap 62 and thus the entire cylinder 42, is free to pivot universally with three degrees of freedom on load bearing 104. Accordingly, any force applied to the fork, tilting it forwardly, rearwardly or sideways will cause said cylinder 42 to pivot to self-align itself with respect to the new position of the fork 18 to avoid bending moment (on the rod 54). That being the case, the hydraulic cylinder 42, including the housing 66 and rod 54, does not have to be designed to accept such bending moments, and thus can be smaller than would normally be necessary. Thus, the hydraulic cylinder mount 50 and cylinder 42 can be small enough so that they can conveniently fit in the carriage 14.

With the hydraulic cylinder 42 being more compact, the carraige 14 can be more compact and thus the load carried by the forks 16 and 18 can be held closer to the center of gravity. Accordingly, the load can be larger than that which could be carried by prior devices.

It is to be understood that hydraulic cylinder mount assembly 58 operates in essentially the same way as described hereinabove.

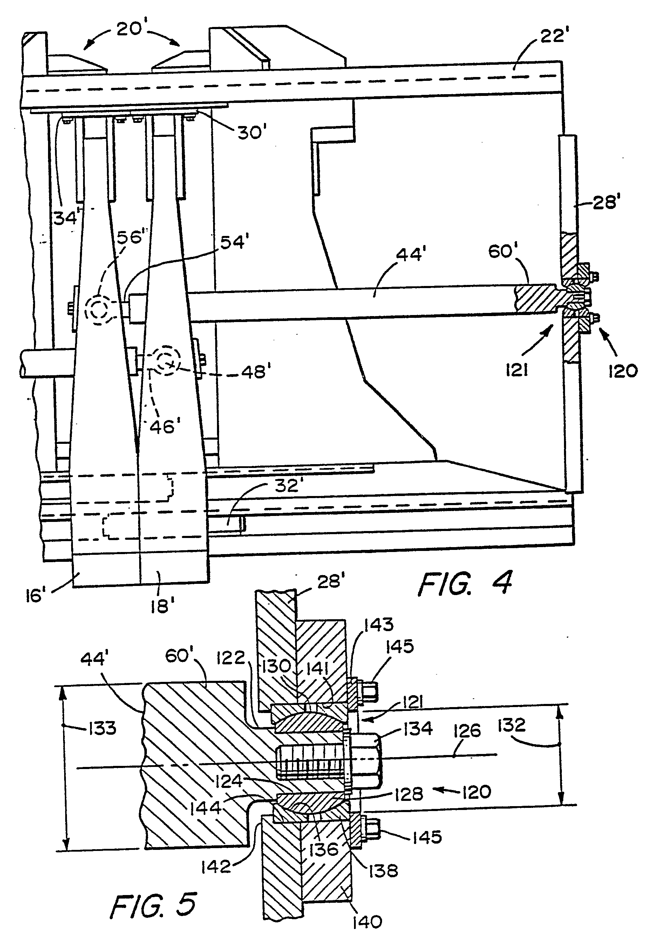

An alternate embodiment of the hydraulic cylinder mount assembly of the invention is depicted in Figs. 4 and 5 and identifed by the numéral 120. It is to be understood that elements in Figs. 4 and 5 which are identical to those in Figure 2 are given the same numerical designation followed by a prime, and that a hydraulic cylinder mount assembly similar to hydraulic mount assembly 120 can be used to actuate second fork 18. Hydraulic cylinder mount assembly 120 includes a mount 121 having a head end extension or neck portion 122 (Figure 5), which is affixed to the head end 60' of cylinder 44' and which defines a reduced diameter portion 124. Neck portion 122 and reduced diameter portion 124 are symmetrical about axis 126 of hydraulic cylinder 60'. A load bearing 128 is disposed upon reduced diameter portion 124 and defines a truncated, spherical convex load bearing surface 130, which has a diameter 132 which is less than the diameter 133 of the cylinder 60'. Alternatively diameter 132 can be equal to or larger than diameter 133. The axis of symmetry of spherical surface 130 is colinear with axis 126. A bolt and washer arrangement 134 retains load bearing 128 on reduced diameter portion 124. Load bearing surface 130 is received by a truncated, spherical concave load bearing surface 136 on a load bearing 138. A mounting bracket 140 is secured to member 28' by means well known in the art, such as welding. Mounting bracket 140 and member 28' have a bore 141 which receives load bearing 138. Load bearing 138 is held therein between annular lip 142 of member 28' and annular ring 143 which is secured to bracket 140 by bolts 145.

The operation of hydraulic cylinder mount assembly 120 is as follows. When fork 16' (Fig. 4) is loaded, cylinder 44' can self-align itself through the pivoting of the spherical surface 130 to avoid any bending moments. Accordingly, the cylinder housing 44' and the rod 54' can be of less massive construction as cylinder 44' need not accommodate bending stresses which are developed in prior art cylinders.

Other aspects, objects and advantages of this invention can be obtained from a study of the drawings, the disclosure and appended claims.

### Claims

1. A mounting assembly (50) for a hydraulic cylinder (42) having a cylindrical housing (66) and a rod (54), said housing (66) having first and second ends (52, 64), a longitudinal housing axis (81) and a predetermined outer diameter (100), and said rod (54) being slidably disposed in the housing (66) and positioned to extend from said second end of said housing, said mounting assembly (50) comprising a bracket (102) having a first spherical load bearing surface (106) and being positioned at a location adjacent one of said first and second ends (52, 64) of said housing (66); and a mount (51) having a second spherical load bearing surface (96) matingly engaged with said first spherical load bearing surface (106) and pivotal relative thereto, a housing cap (62) and a longitudinal mount axis (80), said housing cap (62) being connected to said one of said first and second ends of the cylinder housing (66) and said second spherical load bearing surface (96) being connected to said cap (62), characterised in, that the mount (51) is connected to the second end (64) of said cylinder (42) and the rod (54) extends past the second end of the cylinder and through the mount, that the housing cap of the mount is an end cap (62) and that the second spherical load bearing surface (96) of the mount extends from said end cap along said mount axis (80) to a location spaced from said second end and has a diameter (98) less than the diameter (100) of said housing (66).

2. The mounting assembly as set forth in claim 1 wherein the longitudinal housing axis (81) and longitudinal mount axis (80) are a common axis.

3. The mounting assembly as set forth in claims 1 or 2, wherein said mount (51) includes a bore (88) disposed therein, said bore (88) extends coaxially along said longitudinal mount axis (80), through said second spherical load bearing surface (96) and through said housing end cap (62), said rod (54) being disposed to extend through said bore (88).

4. The mounting assembly as set forth in any of claims 1—3 wherein said first spherical load bearing surface (106) is concave and said second spherical load bearing surface (96) is convex.

5. The mounting assembly as set forth in any of claims 1—3 wherein said hydraulic cylinder (42) includes a threaded portion adjacent said second end, said housing end cap (62) having an annular flange, said annular flange being contactably abuttingly engaged with said second end, and, including; an annular member having a threaded portion and a lip, said threaded portion being screwthreadably engaged with the threaded portion of said cylinder, and said lip being contactably engaged with the annular flange of said housing.

6. The mounting assembly as set forth in any of claims 1—5 wherein said mount (51) is connected to the first end of said cylinder (42) and said rod (54) extends from the second end of said cylinder.

7. A mounting assembly for a hydraulic assembly as claimed in any of claims 1—6, characterised by its use in an assembly comprising a mast (12) having a carraige (14) mounted on said mast, a load carrying fork (18) mounted on said carriage and movable relative to said carriage.

### Revendications

1. Ensemble de montage (50) destiné à un vérin hydraulique (42) comportant un corps cylindrique (66) et une tige (54), ledit corps (66) étant pourvu d'une première et d'une seconde extrémités (52, 64), d'un axe longitudinal (81 du corps et d'un diamètre extérieur (100) prédéterminé, et ladite tige (54) étant insérée à coulissement dans le corps (66) et étant disposée de manière à faire saillie de ladite seconde extrémité dudit corps, ledit ensemble de montage (50) comprenant: un support (102) présentant une première surface sphérique de portée (106) et positionné en un point situé à proximité de l'une desdites première et seconde extrémités (52, 64) dudit corps (66); et une monture (51) présentant une seconde surface sphérique de portée (96) conjuguée avec ladite première surface sphérique de portée (106) et apte à pivoter par rapport à cette dernière, un capuchon (62) du corps et un axe longitudinal de monture (80), ledit capuchon (62) étant relié à ladite des premières et seconde extrémités du corps (66) du vérin et ladite seconde surface sphérique de portée (96) étant reliée audit capuchon (62), caractérisé en ce que la monture (51) est reliée à la seconde extrémité (64) dudit vérin (42) et la tige (54) s'étend au-delà de la seconde extrémité du vérin et à travers la monture, en ce que le capuchon de la monture est un capuchon terminal (62), et en ce que la seconde surface sphérique de portée (96) de la monture s'étend depuis ledit capuchon terminal le long de l'axe (80) de la monture jusqu'à un point espacé de la dite seconde extrémité et possède un diamètre (98) inférieur au diamètre (100) dudit corps (66).

2. Ensemble de montage selon la revendication 1, dans lequel l'axe longitudinal (81) du corps et l'axe longitudinal (80) de la monture sont constitués par un axe commun.

3. Ensemble de montage selon la revendication 1 ou 2, dans lequel ladite monture (51) comprend un alésage (88) pratiqué dans celle-ci, ledit alésage (88) s'étendant coaxialement le long dudit axe longitudinal (80) de la monture, à travers ladite seconde surface sphérique de portée (96) et à travers ledit capuchon terminal (62) du corps, ladite tige (54) étant placée de manière à s'étendre à travers ledit alésage (88).

4. Ensemble de montage selon l'une quelconque des revendications 1 à 3, dans lequel ladite première surface sphérique de portée (106) est concave et ladite seconde surface sphérique de portée (96) est convexe.

5. Ensemble de montage selon l'une quelconque des revendications 1 à 3, dans lequel ledit vérin hydraulique (42) comporte une zone filetée à proximité de ladite seconde extrémité, ledit capuchon terminal (62) du corps ayant une collerette annulaire, ladite collerette annulaire venant en prise à contact sur ladite second extrémité, et comportant: un élément annulaire pourvu d'une zone filetée et d'un lèvre, ladite zone filetée étant en prise par vissage sur la zone filetée dudit vérin, et ladite lèvre étant en prise par contact avec la collerette annulaire dudit corps.

6. Ensemble de montage selon l'une quelconque des revendications 1 à 5, dans lequel ladite monture (51) est reliée à la première extrémité dudit vérin (42), et ladite tige (54) fait saillie de la seconde extrémité dudit vérin.

7. Ensemble de montage selon l'une quelconque des revendications 1 à 6, caractérisé par son utilisation dans un ensemble comprenant un mât (12) pourvu d'un tablier (14) monté sur ledit mât, et une fourche (18) pour porter une charge et montée sur ledit tablier et apte à être déplacée par rapport audit tablier.

**Patentansprüche**

1. Befestigungsanordnung (50) für einen Hydraulikzylinder (42) mit einem zylindrischen Gehäuse (66) und einer Stange (54), wobei das Gehäuse (66) erste und zweite Enden (52, 64) aufweist, eine Längsgehäuseachse (81) und einen vorbestimmten Außendurchmesser (100), und wobei die Stange (54) gleitend in dem Gehäuse (66) angeordnet ist und sich aus dem zweiten Ende des Gehäuses heraus erstreckt, wobei ferner die Befestigungsanordnung (50) einen Bügel (102) aufweist, der eine erste kegelförmige Lastlageroberfläche (106) besitzt und an einer Stelle benachbart zu einem der ersten und zweiten Enden (52, 64) des Gehäuses (66) angeordnet ist, und wobei ferner eine Halterung (51) eine zweite kugelförmige Lastlageroberfläche (96) aufweist, die zusammen passend in Eingriff steht mit der ersten kugelförmigen Lastlageroberfläche (106) und schwenkbar diesbezüchlich angeordnet ist, und mit einer Gehäusekappe (62) und einer Längsbefestigungsachse (80), wobei die Gehäusekappe (62) mit dem einen der erwähnten ersten und zweiten Enden des Zylindergehäuses (66) verbunden ist, und wobei die zweite kugelförmige Lastlageroberfläche (96) mit der Kappe (62) verbunden ist, dadurch gekennzeichnet, daß die Halterung (51) mit dem zweiten Ende (64) des Zylinders (42) verbunden ist, und daß sich die Stange (54) an dem zweiten Ende des Zylinders vorbei und durch die Halterung erstreckt, daß die Gehäusekappe der Halterung eine Endkappe (62) ist, und daß die zweite kugelförmige Lastlageroberfläche (96) der Halterung sich von der Endkappe aus längs der Halterungsachse (80) zu einer Stelle erstreckt, die mit Abstand angeordnet ist gegenüber dem zweiten Ende und einen Durchmesser (98) aufweist, der kleiner ist als der Durchmesser (100) des Gehäuses (66).

2. Befestigungsanordnung nach Anspruch 1, wobei die Längsgehäuseachse (81) und die Längsbefestigungsachse (80) ein gemeinsame Achse sind.

3. Befestigungsanordnung nach Anspruch 1 oder 2, wobei die Halterung (51) eine darin angeordnet Bohrung (88) aufweist, die sich koaxial entlang der Längsbefestigungsachse (80) erstreckt, und zwar durch die erwähnte zweite kugelförmige Lastlageroberfläche (96) und durch die Gehäuseendkappe (62), wobei die Stange (54) derart angeordnet ist, daß sie sich durch die Bohrung (88) erstreckt.

4. Befestigungsanordnung nach einem der Ansprüche 1 bis 3, wobei die erste kugelförmige Lastlageroberfläche (106) konkav ist und wobei die zweite kugelförmige Lastlageroberfläche (96) konvex ist.

5. Befestigungsanordnung nach einem der Ansprüche 1 bis 3, wobei der Hydraulikzylinder (42) einen Gewindeteil aufweist, benachbart zu dem zweiten Ende, und wobei die Gehäuseendkappe (62) einen Ringflansch besitzt, der in kontaktierbarer und anstoßender Weise in Eingriff steht mit dem zweiten Ende, und mit einem Ringglied mit einem Gewindeteil und einer Lippe, wobei der Gewindeteil schraubmäßig in Eingriff steht mit dem Gewindeteil des Zylinders, und wobei die Lippe berührend in Eingriff steht mit dem Ringflansch des Gehäses.

6. Befestigungsanordnung nach einem der Ansprüche 1 bis 5, wobei die Halterung (51) mit dem ersten Ende des zylinders (42) verbunden ist, und wobei die Stange (54) sich vom zweiten Ende des Zylinders aus erstreckt.

7. Befestigungsanordnung für eine Hydraulikanordnung nach einem der Ansprüche 1 bis 6, gekennzeichnet durch die Verwendung in einer Anordnung, die einen Mast (12) aufweist mit einem Schlitten (14), gehaltert am Mast und mit einer Lasttraggabel (18) angeordnet am Schlitten und beweglich bezüglich des Schlittens.

FIG. 1

FIG. 2

0 044 829

FIG. 3

0 044 829

0 044 829

FIG. 4

FIG. 5

4